# EUROPEAN PATENT APPLICATION

(11) **EP 4 366 004 A1**
(43) Date of publication of application: **08.05.2024**
(21) Application number: 22833224.3
(22) Date of filing: 29.06.2022
(51) Int. Cl.: H01M 8/04, H01M 8/04225, H01M 8/04228, H01M 8/04302, H01M 8/04303, H01M 8/0432, H01M 8/0438, H01M 8/04664, H01M 8/10, H01M 8/12

(54) **FUEL CELL SYSTEM, FUEL CELL MODULE AND AUXILIARY UNIT**

(30) Priority: 30.06.2021 JP 2021109481
(71) Applicant: Kyocera Corporation, Kyoto-shi Kyoto 612-8501 (JP)
(72) Inventor: YAMAUCHI, Kyosuke, Kyoto-shi, Kyoto 612-8501 (JP); NISHIGAI, Takanobu, Kyoto-shi, Kyoto 612-8501 (JP)
(74) Representative: TBK
(86) International application number: PCT/JP2022/026007
(87) International publication number: WO 2023/277078

(57) **Abstract**

A fuel cell system includes a first controller for controlling a fuel cell module having a cell stack, and a second controller for controlling an auxiliary unit having a peripheral device of the fuel cell module, wherein the first controller is physically or virtually independent of the second controller.

## Description

### TECHNICAL FIELD

The present invention relates to a fuel cell system, a fuel cell module, and an auxiliary unit.

### BACKGROUND OF INVENTION

Conventionally, there is a known fuel cell system including a fuel cell module having a cell stack and an auxiliary unit having a peripheral device of the fuel cell module. For example, the auxiliary unit is an air blower, a pump, or the like (for example, Patent Document 1).

There is also a known technique of configuring a fuel cell system by combining a modularized fuel cell module with an auxiliary unit (for example, Patent Document 2).

### CITATION LIST

### PATENT LITERATURE

Patent Document 1: JP 2016-76367 A
Patent Document 2: JP 2017-152097 A

### SUMMARY

A fuel cell system according to the disclosure includes: a first controller configured to control a fuel cell module including a cell stack; and a second controller configured to control an auxiliary unit including a peripheral device of the fuel cell module, wherein the first controller is physically or virtually independent of the second controller.

A fuel cell module according to the disclosure includes a cell stack; and a controller physically or virtually independent of a predetermined controller configured to control an auxiliary unit including a peripheral device of the fuel cell module.

An auxiliary unit according to the disclosure includes a peripheral device of a fuel cell module including a cell stack; and a controller physically or virtually independent of a predetermined controller configured to control the fuel cell module.

### BRIEF DESCRIPTION OF THE DRAWINGS

FIG. 1 is a diagram illustrating a fuel cell system 100 according to an embodiment.
FIG. 2 is a diagram illustrating a first controller 50 and a second controller 60 according to the embodiment.
FIG. 3 is a diagram illustrating a notification method according to the embodiment.
FIG. 4 is a diagram illustrating the first controller 50 and the second controller 60 according to Variation 1.
FIG. 5 is a diagram illustrating the first controller 50 and the second controller 60 according to Variation 1.

### DESCRIPTION OF EMBODIMENTS

Embodiments will be described below with reference to the accompanying drawings. Note that in the following description of the drawings, the same or similar components will be denoted by the same or similar reference signs. However, the drawings are schematic.

### Embodiment

### Fuel Cell System

### A fuel cell system will be described below.

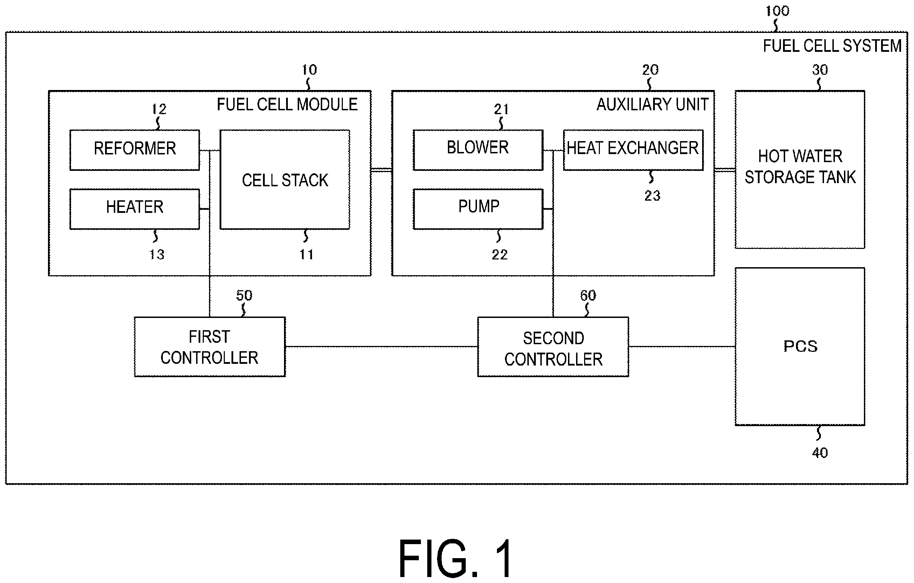

As illustrated in FIG. 1, a fuel cell system 100 includes a fuel cell module 10, an auxiliary unit 20, a hot water storage tank 30, a power conditioning system (PCS) 40, a first controller 50, and a second controller 60.

The fuel cell module 10 is a module that generates power using fuel. For example, the fuel cell module 10 includes at least a cell stack 11, and in this specification, a fuel cell module in which the cell stack 11 is entirely covered in some form is referred to as a fuel cell module. Note that in FIG. 1, the fuel cell module 10 further includes a reformer 12 and a heater 13.

The cell stack 11 generates power by a chemical reaction between air (oxygen) supplied from a blower 21 described below and a reformed gas. Each cell has a structure in which an electrolyte is interposed between a fuel electrode and an air electrode. A reformed gas is supplied to the fuel electrode, and air is supplied to the air electrode. A chemical reaction of the reformed gas and air occurs in the electrolyte to produce power and heat.

The reformer 12 produces a reformed gas from fuel. For example, the reformed gas is a gas containing hydrogen.

The heater 13 ignites fuel that has not chemically reacted in the cell stack 11 (hereinafter, referred to as unreacted fuel), and maintains the temperature of the cell stack 11 at a high temperature (for example, from 600°C to 1000°C).

Although not particularly limited, the fuel cell module 10 may have a configuration other than the cell stack 11, the reformer 12, and the heater 13. For example, the fuel cell module 10 may include a sensor that measures a temperature of the fuel cell module 10 or the reformer 12. The fuel cell module 10 may also be referred to as a hot module.

The auxiliary unit 20 is a unit having a peripheral device of the fuel cell module. For example, the auxiliary unit 20 includes a blower 21, a pump 22, and a heat exchanger 23.

The blower 21 is a device that feeds a gas. For example, the blower 21 may include a blower that feeds air to the cell stack 11 (air electrode), a blower that feeds air used for selective oxidation of carbon monoxide to the reformer 12, and the like.

The pump 22 is a device that feeds a liquid. For example, the pump 22 may include a pump that feeds fuel to the reformer 12 (desulfurizer), a pump that feeds reforming water used for reforming fuel to the reformer 12, a pump that feeds cooling water used for cooling the cell stack 11 to the cell stack 11 (cooler), a pump that feeds water from the heat exchanger 23 side to the hot water storage tank 30 side, and the like.

The heat exchanger 23 is a device that recovers exhaust heat generated in the cell stack 11. A recirculation pipe is connected to the heat exchanger 23. The recirculation pipe forms a flow path of water from the hot water storage tank 30 side to the heat exchanger 23 side and a flow path of water from the heat exchanger 23 side to the hot water storage tank 30 side. The heat exchanger 23 recovers exhaust heat by heating water supplied from the hot water storage tank 30 via the recirculation pipe. The heat exchanger 23 may configure a hot water storage unit together with the hot water storage tank 30 without being included in the auxiliary unit 20.

The hot water storage tank 30 is a tank for storing water. The recirculation pipe is connected to the hot water storage tank 30. The water to the heat exchanger 23 side is heated by the heat exchanger 23 (exhaust heat of the fuel cell module 10) and then returned to the hot water storage tank 30.

The PCS 40 includes a DC-DC converter that adjusts a voltage of direct current power generated by the fuel cell module 10, a DC-AC converter that converts the direct current power into alternating current power, and the like.

The auxiliary unit 20 may have a configuration other than the blower 21, the pump 22, and the heat exchanger 23. For example, the auxiliary unit 20 may include a desulfurizer that removes odorant from fuel and supplies the fuel (reformed gas) from which the odorant has been removed to the cell stack 11, or may include a radiator that cools the cell stack 11.

The first controller 50 controls the fuel cell module 10. The first controller 50 is virtually or physically independent of the second controller 60. In the embodiment, the first controller 50 may be an example of the first controller or may be an example of the predetermined controller.

The first controller 50 may be included in the fuel cell module 10. The first controller 50 need not be included in the fuel cell module 10. For example, the first controller 50 may be mounted on a substrate configured as a separate body from the fuel cell module 10.

The second controller 60 controls the auxiliary unit 20. The second controller 60 is virtually or physically independent of the first controller 50. In the embodiment, the second controller 60 may be an example of the second controller or may be an example of the predetermined controller.

The second controller 60 may be included in the auxiliary unit 20. The second controller 60 need not be included in the auxiliary unit 20. For example, the second controller 60 may be mounted on a substrate configured as a separate body from the auxiliary unit 20.

### First Controller and Second Controller

The first controller and the second controller will be described in detail below.

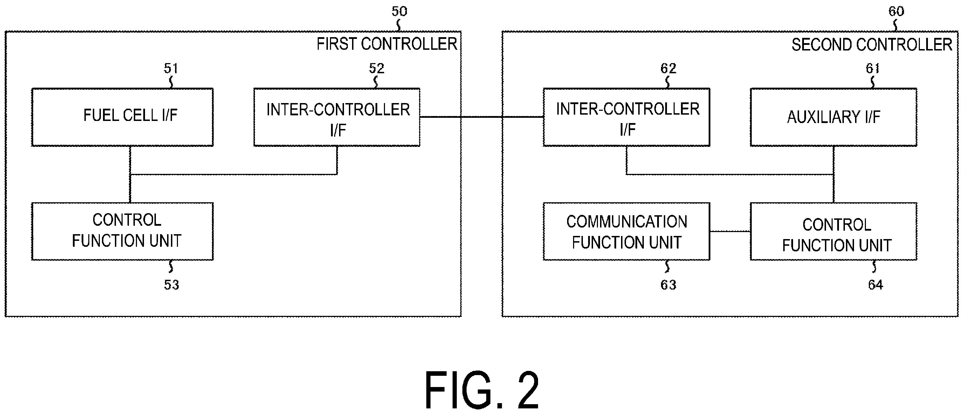

As illustrated in FIG. 2, the first controller 50 includes a fuel cell interface 51 (hereinafter, referred to as fuel cell I/F 51), an inter-controller interface 52 (hereinafter, referred to as inter-controller I/F 52), and a control function unit 53.

The fuel cell I/F 51 is an interface for connecting each component of the fuel cell module 10 to the first controller 50. For example, the fuel cell I/F 51 is connected to the cell stack 11 and may output a control command related to the cell stack 11. The fuel cell I/F 51 is connected to the reformer 12 and may output a control command related to the reformer 12. The fuel cell I/F 51 is connected to the heater 13 and may output a control command related to the heater 13.

The fuel cell I/F 51 is connected to a sensor that detects a state of the fuel cell module 10 and may receive a detection result of the sensor. The sensor may include a sensor that detects a temperature of the fuel cell module 10 or the reformer 12, or a sensor that detects a flow rate of a fluid (gas or liquid) fed to the fuel cell module. The temperature of the fuel cell module 10 may include the internal temperature of the fuel cell module 10 (for example, the temperature of the cell stack 11) or the external temperature of the fuel cell module 10 (for example, the outside air temperature).

The inter-controller I/F 52 is an interface for connecting the second controller 60 to the first controller 50. The inter-controller I/F 52 notifies the second controller 60 of various information elements and receives various information elements from the second controller 60. In the embodiment, the inter-controller I/F 52 configures a notification unit that notifies the second controller 60 of a specific information element related to a state of the fuel cell module 10.

The control function unit 53 controls each component of the fuel cell module 10. The control function unit 53 generates a control command related to the cell stack 11, a control command related to the reformer 12, a control command related to the heater 13, and the like.

The second controller 60 includes an auxiliary interface 61 (hereinafter, referred to as auxiliary I/F 61), an inter-controller interface 62 (hereinafter, referred to as inter-controller I/F 62), a communication function unit 63, and a control function unit 64.

The auxiliary I/F 61 is an interface for connecting each component of the auxiliary unit 20 to the second controller 60. For example, the auxiliary I/F 61 is connected to the blower 21 and may output a control command related to the blower 21. The auxiliary I/F 61 is connected to the pump 22 and may output a control command related to the pump 22. The auxiliary I/F 61 is connected to the heat exchanger 23 and may output a control command related to the heat exchanger 23.

The inter-controller I/F 62 is an interface for connecting the first controller 50 to the second controller 60. The inter-controller I/F 62 notifies the first controller 50 of various information elements and receives various information elements from the first controller 50. In the embodiment, the inter-controller I/F 62 configures a receiving unit that receives a specific information element related to a state of the fuel cell module 10 from the first controller 50.

The communication function unit 63 performs communication with an external device of the second controller 60. The external device may be the PCS 40, an energy management system (EMS) that manages the power of a facility including the fuel cell system 100, or an operations administration and maintenance (OAM) server that manages an operation state of the fuel cell module 10, the auxiliary unit 20, or the fuel cell system 100.

The control function unit 64 controls each component of the auxiliary unit 20. The control function unit 64 generates a control command related to the blower 21, a control command related to the pump 22, a control command related to the heat exchanger 23, and the like.

### Specific Information Element

The specific information element will be described below. The specific information element may be an information element that is not grasped by the second controller 60 but can be grasped by the first controller 50. The specific information element may be an information element that is not grasped by the second controller 60 but can be used to control the auxiliary unit 20. For example, the specific information element may include the following information elements.

### Operation Operating State

The specific information element may include an information element related to an operation operating state of the fuel cell module 10. The operation operating state can be managed by the first controller 50.

The operation operating state may include a power generation operating state. The power generation operating state may include one or more selected from a power generating state, a stopped operation (hereinafter, simply referred to as stopped in some cases) state, a starting up state, a stopping operation state, and an idling state. The power generating state is a state in which the fuel cell module 10 is generating power. The stopped state is a state in which operation of the fuel cell module 10 is stopped. The starting up state is a state transitioning from the stopped state to the power generating state. The stopping operation state is a state transitioning from the power generating state to the stopped state. The idling state is a state in which the temperature of the cell stack 11 is maintained at a predetermined temperature although the fuel cell module 10 is not generating power. The predetermined temperature may be approximately the same as a power generation temperature (for example, 600°C to 1000°C) or may be a temperature (for example, 450°C to 600°C) lower than the power generation temperature.

The operation operating state may include a shutdown state. The shutdown state is a state in which the fuel cell module 10 is forcibly stopped due to an abnormality of the fuel cell module 10.

Under such a premise, the first controller 50 may notify the second controller 60 of an information element related to the operation operating state in response to a request from the second controller 60. The first controller 50 may notify the second controller 60 of an information element related to the operation operating state in response to a predetermined trigger, without a request from the second controller 60. The predetermined trigger may be a change in the operation operating state.

### Deterioration State

The specific information element may include an information element related to a deterioration state of the fuel cell module 10. The deterioration state can be managed by the first controller 50.

The information element related to the deterioration state may be an information element indicating a cumulative operation time of the fuel cell module 10. For example, the cumulative operation time may be a cumulative time during which the fuel cell module 10 is generating power, or a cumulative time other than the time during which the fuel cell module 10 is in the stopped state.

The information element related to the deterioration state may be an information element indicating an output voltage value of the fuel cell module 10. Such an output voltage value can be used for specifying the deterioration state by comparing the output voltage value with the output voltage value (initial value) of the fuel cell module 10 in an initial state. Here, the comparison between both the output voltage values may be performed based on a predetermined operation of the fuel cell module.

Here, the comparison between both the temperatures may be performed based on a predetermined operation of the fuel cell module. The predetermined operation of the fuel cell module may be an operation in which the fuel cell module 10 outputs rated power.

The information element related to the deterioration state may be an information element indicating the internal temperature of the fuel cell module 10 (for example, the temperature of the cell stack 11). Such a temperature can be used for specifying the deterioration state by comparing the temperature with a temperature (initial value) of the internal temperature of the fuel cell module 10 in the initial state. Here, the comparison between both the temperatures may be performed based on a predetermined operation of the fuel cell module. The predetermined operation of the fuel cell module may be an operation in which the fuel cell module 10 outputs rated power.

The information element related to the deterioration state may be an information element indicating an open circuit voltage (OCV) when starting up the fuel cell module 10. Such an OCV can be used for specifying the deterioration state by comparing the OCV with an OCV (initial value) when starting up the fuel cell module 10 in the initial state.

The information element related to the deterioration state may be an information element indicating a minimum output voltage value immediately after the start of power generation of the fuel cell module 10. Such a minimum voltage value can be used for specifying the deterioration state by comparing the minimum voltage value with the minimum output voltage value (initial value) immediately after the start of power generation of the fuel cell module 10 in the initial state.

The information element related to the deterioration state may be an information element indicating a temperature increase rate related to the internal temperature of the fuel cell module 10. The temperature increase rate may be a rate at which the temperature increases in the starting up state. Such a temperature increase rate can be used for specifying the deterioration state by comparing the temperature increase rate with a temperature increase rate (initial value) related to the internal temperature of the fuel cell module 10 in the initial state.

The information element related to the deterioration state may be an information element indicating a DC power value of the fuel cell module 10. Such a DC power value can be used for specifying the deterioration state by comparing the DC power value with a DC power value (initial value) of the fuel cell module 10 in the initial state.

The information element related to the deterioration state may be an information element indicating a time until output power of the fuel cell module 10 reaches the rated power (hereinafter, referred to as a transition time). The time to reach the rated power may be the transition time from immediately after the start of power generation until the rated power is reached. Such a transition time can be used for specifying the deterioration state by comparing the transition time with the transition time (initial value) in the initial state.

The information element related to the deterioration state may be an information element indicating a level of the deterioration state. The level of the deterioration state may be determined by the first controller 50 on the basis of one or more parameters selected from the cumulative operation time, the output voltage value, the temperature of the cell stack 11, the OCV, the minimum output voltage value, the temperature increase rate, the DC power value, and the transition time.

Under such a premise, the first controller 50 may notify the second controller 60 of the information element related to the deterioration state, in response to a request from the second controller 60. The first controller 50 may notify the second controller 60 of the information element related to the deterioration state in response to a predetermined trigger, without a request from the second controller 60. The predetermined trigger may be a change in the level of the deterioration state described above. The predetermined trigger may be an elapse of a predetermined time from the transition of the operation operating state to the power generating state. The predetermined trigger may be that a time in the power generating state (hereinafter, referred to as power generation time) reaches a predetermined time. The predetermined time may be a time (for example, 168 hours corresponding to about one week, 720 hours corresponding to about one month, or the like) that defines a periodic timing. The predetermined time may be a time (for example, 11 hours or 600 hours) defined in accordance with an abnormality detection time of a household gas meter under the assumption that the fuel gas is supplied to the fuel cell system 100 via the household gas meter.

Note that the power generation time is reset every predetermined time. The predetermined trigger may be the arrival of a predetermined timing (for example, 3:30). The predetermined trigger may be that the fuel cell module 10 is stopped when a time during which the fuel cell module 10 continuously operates reaches a predetermined time.

### Temperature State

The specific information element may include an information element related to a temperature state of the fuel cell module 10. The temperature state can be managed by the first controller 50 under the premise that the internal temperature of the fuel cell module 10 (for example, the temperature of the cell stack 11) is acquired by the fuel cell I/F 51.

The information element related to the temperature state may include an information element indicating the internal temperature of the fuel cell module 10. The information element related to the temperature state may be an information element indicating a level of the temperature state of the fuel cell module 10. The level of the temperature state may include a level at which work on the fuel cell module 10 is prohibited, a level at which some work on the fuel cell module 10 (for example, work on a portion other than a heat transfer portion) is permitted, a level at which all work on the fuel cell module 10 is permitted, and the like. In such a case, the information element related to the temperature state may be read as an information element related to whether work on the fuel cell module 10 is possible.

Under such a premise, the first controller 50 may notify the second controller 60 of the information element related to the temperature state in response to a request from the second controller 60. The first controller 50 may notify the second controller 60 of the information element related to the temperature state in response to a predetermined trigger, without a request from the second controller 60. The predetermined trigger may be a change in the level of the temperature state described above.

### Scheduled Stop Time

The specific information element may include an information element related to a scheduled stop time of the fuel cell module 10. The scheduled stop time can be specified by the first controller 50.

The scheduled stop time may be a scheduled time at which the transition from the power generating state to the stopped state is completed. The scheduled stop time may be represented by a remaining time until the transition from the power generating state to the stopped state is completed, or may be represented by an absolute time at which the transition from the power generating state to the stopped state is completed.

For example, the first controller 50 may specify the scheduled stop time on the basis of the internal temperature and/or the external temperature of the fuel cell module 10 at a timing of transition from the power generating state to the stopping operation state. The first controller 50 may correct the scheduled stop time on the basis of a temperature decrease rate related to the internal temperature of the fuel cell module 10 in the stopping operation state.

Here, the stopping operation state may include two or more stopping operation stages. In such a case, the first controller 50 may specify a scheduled time at which each stopping operation stage is completed for each stopping operation stage.

Under such a premise, the first controller 50 may notify the second controller 60 of the information element related to the scheduled stop time in response to a request from the second controller 60. The first controller 50 may notify the second controller 60 of the information element related to the scheduled stop time in response to a predetermined trigger, without a request from the second controller 60. The predetermined trigger may be a change in the scheduled stop time or a change in the stopping operation stage.

### Scheduled Power Generation Start Time

The specific information element may include an information element related to a scheduled power generation start time of the fuel cell module 10. The scheduled power generation start time can be specified by the first controller 50.

The scheduled power generation start time may be a scheduled time at which the transition from the stopped state to the power generating state is completed. The scheduled power generation start time may be represented by a remaining time until the transition from the stopped state to the power generating state is completed, or may be represented by an absolute time at which the transition from the stopped state to the power generating state is completed.

For example, the first controller 50 may specify the scheduled power generation start time on the basis of the internal temperature and/or the external temperature of the fuel cell module 10 at a timing of transition from the stopped state to the starting up state. The first controller 50 may correct the scheduled power generation start time on the basis of a temperature increase rate related to the internal temperature of the fuel cell module 10 in the starting up state.

Here, the starting up state may include two or more start-up stages. In such a case, the first controller 50 may specify a scheduled time at which each start-up stage is completed for each start-up stage. Each start-up stage may be determined in accordance with a flow rate of the reforming water fed to the fuel cell module 10. Each start-up stage may be determined in accordance with the internal temperature, the output voltage value, and the like of the fuel cell module 10.

Under such a premise, the first controller 50 may notify the second controller 60 of the information element related to the scheduled power generation start time in response to a request from the second controller 60. The first controller 50 may notify the second controller 60 of the information element related to the scheduled power generation start time in response to a predetermined trigger, without a request from the second controller 60. The predetermined trigger may be a change in the scheduled power generation start time or a change in the starting up stage.

### Whether Start-up Is Possible

The specific information element may include an information element related to whether start-up of the fuel cell module 10 is possible. Whether start-up is possible can be determined by the first controller 50.

Whether start-up is possible may be determined on the basis of the internal temperature of the fuel cell module 10 or on the basis of the external temperature of the fuel cell module 10. For example, when the internal temperature is higher than a threshold value, it may be determined that start-up is not possible, and when the internal temperature is lower than the threshold value, it may be determined that start-up is possible. When the external temperature is lower than the threshold value, it may be determined that start-up is not possible, and when the external temperature is higher than the threshold value, it may be determined that start-up is possible.

Under such a premise, the first controller 50 may notify the second controller 60 of the information element related to whether start-up is possible in response to a request from the second controller 60. The first controller 50 may notify the second controller 60 of the information element related to whether start-up is possible in response to a predetermined trigger, without a request from the second controller 60. The predetermined trigger may be that a disabling condition for the start-up is satisfied or an enabling condition for the start-up is satisfied.

### Whether Stoppage Is Possible

The specific information element may include an information element related to whether stoppage of the fuel cell module 10 is possible. Whether stoppage is possible can be determined by the first controller 50.

Whether stoppage is possible may be determined on the basis of an interconnection state of the fuel cell system 100. For example, when the fuel cell system 100 is in a self-sustained operation state, it may be determined that stoppage is not possible, and when the fuel cell system 100 is in an interconnection operation state, it may be determined that stoppage is possible. Whether stoppage is possible may be determined on the basis of the operation operating state of the fuel cell module 10. For example, when the fuel cell module 10 is in the starting up state, it may be determined that stoppage is not possible, and when the fuel cell module 10 is in the power generating state, it may be determined that stoppage is possible.

Here, the first controller 50 may execute shutdown in association with an abnormality or the like of the fuel cell module 10 even when the disabling condition for stoppage is satisfied. The first controller 50 may notify a reason why stoppage is not possible as the information element related to whether stoppage is possible.

Under such a premise, the first controller 50 may notify the second controller 60 of the information element related to whether stoppage is possible in response to a request from the second controller 60. The first controller 50 may notify the second controller 60 of the information element related to whether stoppage is possible in response to a predetermined trigger, without a request from the second controller 60. The predetermined trigger may be that a disabling condition for the start-up is satisfied or an enabling condition for the start-up is satisfied.

### Fluid State

The specific information element may include an information element related to a state of a fluid supplied from the auxiliary unit 20 to the fuel cell module 10. The fluid may include a gas or a liquid. The fluid can be managed by the first controller 50 under the premise that a flow rate of the gas fed from the blower 21 to the fuel cell module 10 is acquired by the fuel cell I/F 51. Similarly, the fluid can be managed by the first controller 50 under the premise that a flow rate of the liquid fed from the pump 22 to the fuel cell module 10 is acquired by the fuel cell I/F 51.

The information element related to the fluid state may include an information element indicating a flow rate of the fluid or an information element indicating whether supply of the fluid is possible. Information elements related to fuel (hereinafter, fuel gas), water, and air may also be included. The fuel gas may include a raw gas to be fed to the reformer 12 (desulfurizer) or may include an unburnt gas that has not been burned by the heater 13. The unburnt gas may be determined by the temperature of the heater 13, or may be determined by the temperature of a combustion catalyst when the combustion catalyst is used in the cell stack 11.

Here, when transitioning from a state in which a fluid cannot be supplied to a state in which a fluid can be supplied, the first controller 50 may provide notification of an information element indicating that fuel can be supplied after providing notification of an information element indicating that water can be supplied. When the internal temperature of the fuel cell module 10 is equal to or higher than the threshold value, the first controller 50 may provide notification of the information element indicating that fuel can be supplied after providing notification of the information element indicating that water can be supplied. In the stopped state, the first controller 50 may provide notification of the information element indicating that air can be supplied and then provide notification of the information element indicating that fuel can be supplied, and may provide notification of the information element indicating that fuel can be supplied and then provide notification of the information element indicating that water can be supplied.

Under such a premise, the first controller 50 may notify the second controller 60 of the information element related to the fluid state in response to a request from the second controller 60. The first controller 50 may notify the second controller 60 of the information element related to the fluid state in response to a predetermined trigger, without a request from the second controller 60. The predetermined trigger may be that the fuel cell module 10 is shut down or that the internal temperature of the fuel cell module 10 is higher than the threshold value.

### Abnormal State

The specific information element may include an information element related to an abnormal state of the fuel cell module 10. The abnormal state can be specified by the first controller 50.

The abnormal state may include an abnormal state of at least one of the components of the fuel cell module 10. The abnormal state may be determined on the basis of the internal temperature of the fuel cell module 10. For example, when the internal temperature is higher than the threshold value, it may be determined that an abnormal state has occurred. The abnormal state may be determined on the basis of a flow rate of the fluid. For example, when a flow rate of the fluid is different from a predetermined flow rate, it may be determined that the abnormal state has occurred. The predetermined flow rate may be determined in accordance with an operation operating state of the fuel cell module 10. The predetermined flow rate may be determined on the basis of a flow rate requested from the first controller 50 to the second controller 60. The abnormal state may be determined on the basis of the output power of the fuel cell module 10. For example, it may be determined that the abnormal state has occurred when the output power is not stabilized at the rated power or the like.

The information element related to the abnormal state may explicitly or implicitly include an information element for requesting the second controller 60 to shut down the fuel cell module 10.

Under such a premise, the first controller 50 may notify the second controller 60 of the information element related to the abnormal state in response to a request from the second controller 60. The first controller 50 may notify the second controller 60 of the information element related to the abnormal state in response to a predetermined trigger, without a request from the second controller 60. The predetermined trigger may be detection of an abnormal state of the fuel cell module 10.

### Notification Method

A notification method will be described below.

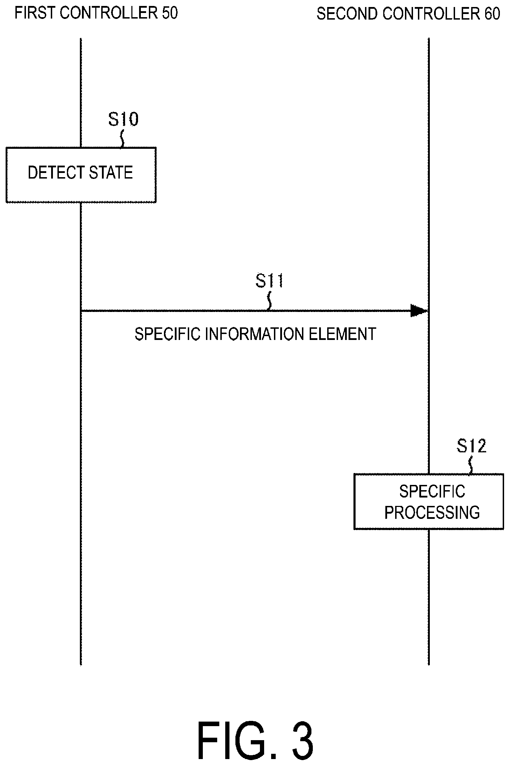

As illustrated in FIG. 3, in step S10, the first controller 50 detects a state of the fuel cell module 10. As described above, the state may be one or more states selected from the operation operating state, the deterioration state, the temperature state, the scheduled stop time, the scheduled power generation start time, whether start-up is possible, whether stoppage is possible, the fluid state, and the abnormal state.

In step S 11, the first controller 50 notifies the second controller 60 of a specific information element related to the state of the fuel cell module 10. The first controller 50 may notify the second controller 60 of the specific information element in response to a request from the second controller 60. The first controller 50 may notify the second controller 60 of the specific information element in response to a predetermined trigger, without a request from the second controller 60.

In step S12, the second controller 60 may execute specific processing corresponding to the specific information elements. For example, the second controller 60 may execute the following specific processing.

The second controller 60 may notify an external device (for example, an energy management system (EMS) or the like) of the operation operating state on the basis of the information element related to the operation operating state, and may control the PCS 40. According to such a configuration, the EMS can appropriately formulate a plan for controlling the power of a facility or the like, and the second controller 60 can appropriately control the PCS 40.

The second controller 60 may notify an external device (for example, an operations administration and maintenance (OAM) server that manages maintenance and the like of the fuel cell module 10, or the like) of the deterioration state on the basis of the information element related to the deterioration state. According to such a configuration, the maintenance or the like of the fuel cell module 10 can be appropriately managed or executed.

The second controller 60 may output an alert to a user on the basis of the information element related to the temperature state. According to such a configuration, an operator can safely perform maintenance of the fuel cell module 10.

The second controller 60 may notify an external device (for example, an OAM server, a terminal of an operator who performs maintenance of the fuel cell module 10, or the like) of the scheduled stop time on the basis of the information element related to the scheduled stop time. According to such a configuration, since it is possible to grasp a time at which maintenance of the fuel cell module 10 can be started, it is possible to appropriately formulate a plan for an operator to perform maintenance.

The second controller 60 may control the PCS 40 on the basis of the information element related to the scheduled power generation start time. For example, the second controller 60 may determine whether power generation is possible at a current time point on the basis of the scheduled power generation start time, and may control the PCS 40 so that power is not supplied from the fuel cell module 10 to the PCS 40 until power generation is possible. The second controller 60 may notify an external device (EMS or the like) of the scheduled power generation start time on the basis of the information element related to the scheduled power generation start time. According to such a configuration, the EMS can grasp a timing at which power can be output from the fuel cell system 100, and can appropriately formulate a plan for controlling power of a facility or the like.

The second controller 60 may output an alert to a user on the basis of the information element related to whether start-up is possible. The second controller 60 may output an alert to the effect that a failure will occur in the fuel cell module 10 if a start-up operation of the fuel cell module 10 is performed by a user operation in a situation where the first controller 50 provides notification that start-up is not possible. According to such a configuration, an inappropriate user operation on the fuel cell module 10 can be suppressed.

The second controller 60 may output an alert to the user on the basis of the information element related to whether stoppage is possible. The second controller 60 may output an alert to the effect that the supply of power is stopped (blackout) when a stopping operation of the fuel cell module 10 is performed by a user operation in a situation where the first controller 50 provides notification that stoppage is not possible in the self-sustained operation state. According to such a configuration, an inappropriate user operation on the fuel cell module 10 can be suppressed.

The second controller 60 may shut down the fuel cell module 10 on the basis of the information element related to the fluid state. The second controller 60 may output an alert to the user on the basis of the information element related to the fluid state. The alert may include an alert prompting confirmation related to whether a connector is disconnected, or may include an alert prompting confirmation related to whether a fluid such as a fuel gas, water, and air is being fed to the fuel cell module 10. The alert may include an alert for providing notification that unburnt gas is flowing. According to such a configuration, the abnormality of the fuel cell module 10 can be appropriately suppressed or resolved.

The second controller 60 may shut down the fuel cell module 10 on the basis of the information element related to the abnormal state. The second controller 60 may output an alert to the user on the basis of the information element related to the abnormal state. The alert may include an alert prompting confirmation related to whether a connector is disconnected, an alert prompting confirmation related to whether a fluid such as fuel gas, water, and air is being fed to the fuel cell module 10, or an alert prompting confirmation related to whether an output current of the fuel cell module 10 has an appropriate value. According to such a configuration, the abnormality of the fuel cell module 10 can be appropriately suppressed or resolved.

### Actions and Effects

In the embodiment, the first controller 50 that controls the fuel cell module 10 is physically or virtually independent of the second controller 60 that controls the auxiliary unit 20. According to such a configuration, even when a case is assumed in which a new fuel cell module 10 is combined with an existing auxiliary unit 20 for reasons such as the product life of the fuel cell module 10 being different from the product life of the auxiliary unit 20, modification of the second controller 60 that controls the existing auxiliary unit 20 can be suppressed.

In the embodiment, the first controller 50 notifies the second controller 60 of a specific information element related to a state of the fuel cell module 10. According to such a configuration, the second controller 60 can appropriately perform specific processing corresponding to the specific information element. In other words, in the case where the new fuel cell module 10 is combined with the existing auxiliary unit 20, since the specific information element is standardized, modification of the second controller 60 that controls the existing auxiliary unit 20 can be suppressed, while maintaining compatibility between the existing fuel cell module 10 and the new fuel cell module 10.

### Variation 1

Variation 1 of the embodiment will be described below. In the following, differences from the embodiment will be described.

Specifically, in Variation 1, a hardware configuration related to the first controller 50 and the second controller 60 will be described.

First, a case where the first controller 50 and the second controller 60 are physically independent will be described. In such a case, the first controller 50 and the second controller 60 are constituted by physically independent processors.

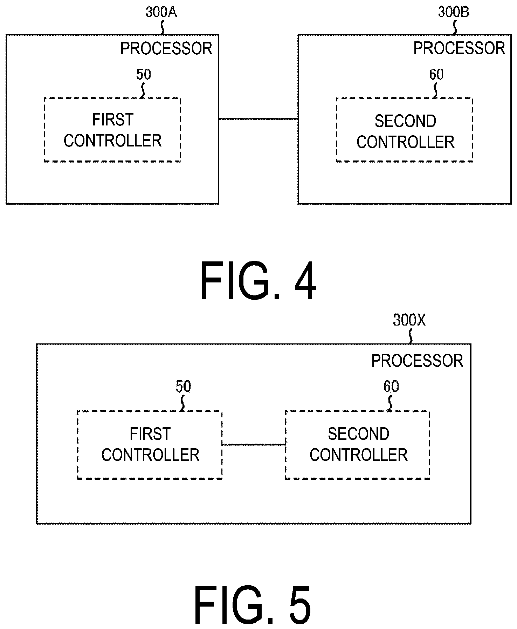

Specifically, as illustrated in FIG. 4, the first controller 50 is constituted by a processor 300A, and the second controller 60 is constituted by a processor 300B. The first controller 50 may be considered to be a program module implemented on the processor 300A. The second controller 60 may be considered to be a program module implemented on the processor 300B.

The processor 300A may be configured by a single integrated circuit (IC) or a plurality of circuits (such as integrated circuits and/or discrete circuits) communicatively connected to each other. Similarly, the processor 300B may be configured by a single integrated circuit (IC) or a plurality of circuits (such as integrated circuits and/or discrete circuits) communicatively connected to each other.

The processor may be read as a microcomputer or a microcontroller. The processor may be read as a semiconductor chip. The processor may be read as a programmable logic device (PLD) such as a field-programmable gate array (FPGA). The program module may be read as firmware or may be read as software. The program module has a communication function and may be rewritten by an external device.

In the hardware configuration illustrated in FIG. 4, the processor 300A may be considered to be included in the fuel cell module 10. Similarly, the processor 300B may be considered to be included in the auxiliary unit 20.

Second, a case where the first controller 50 and the second controller 60 are virtually independent will be described. In such a case, the first controller 50 and the second controller 60 are constituted by virtually independent program modules.

Specifically, as illustrated in FIG. 5, the first controller 50 and the second controller 60 are constituted by separate program modules implemented on a processor 300X. The processor 300X may be constituted by a single integrated circuit (IC) or a plurality of circuits (such as integrated circuits and/or discrete circuits) communicatively connected to each other.

The processor may be read as a microcomputer or a microcontroller. The processor may be read as a semiconductor chip. The processor may be read as a programmable logic device (PLD) such as a field-programmable gate array (FPGA). The program module may be read as firmware or may be read as software. The program module has a communication function and may be rewritten by an external device.

In the hardware configuration illustrated in FIG. 5, the processor 300X may be considered to be included in the fuel cell module 10 or may be considered to be included in the auxiliary unit 20. Considering that the fuel cell module 10 reaches a high temperature, the processor 300X is preferably included in the auxiliary unit 20.

In the hardware configuration illustrated in FIG. 5, the inter-controller I/F 52 of the first controller 50 uses the hardware resources of the processor 300X to notify the inter-controller I/F 62 of the second controller 60 of the specific information element. In other words, the inter-controller I/F 62 of the second controller 60 uses the hardware resources of the processor 300X to receive the specific information element from the inter-controller I/F 52 of the first controller 50.

### Other Embodiments

Although the present invention is described by the above-described embodiments, it should not be understood that the description and the drawings, which form a part of this disclosure, limit this invention. Various alternative embodiments, examples, and operational techniques will be apparent from this disclosure to those skilled in the art.

Although not particularly mentioned in the above disclosure, the user may include an operator who performs maintenance of the fuel cell module 10, a user of the fuel cell system 100, or a manager of the fuel cell system 100.

Although not particularly mentioned in the above disclosure, the fuel cell module 10 may be a solid oxide fuel cell (SOFC), a solid polymer electrolyte fuel cell (PEFC), a phosphoric acid fuel cell (PAFC), or a molten carbonate fuel cell (MCFC).

Although not particularly mentioned in the above disclosure, the above disclosure may contribute to Goal 7 (clean energy for all), Goal 9 (build industry, innovation, and infrastructure), Goal 11 (make cities sustainable) and Goal 13 (take specific measures against climate change) defined in the Sustainable Development Goals (SDGs).

### REFERENCE SIGNS

10 fuel cell module (fuel cell module), 11 cell stack (cell stack), 12 reformer, 13 heater, 20 auxiliary unit (auxiliary unit), 21 blower (peripheral device), 22 pump (peripheral device), 23 heat exchanger 23 (peripheral device), 30 hot water storage tank, 40 PCS, 50 first controller (first controller), 51 fuel cell I/F, 52 inter-controller I/F, 53 control function unit, 60 second controller (second controller), 61 auxiliary I/F, 62 inter-controller I/F, 63 communication function unit, 64 control function unit, 100 fuel cell system, 300A processor, 300B processor, 300X processor

## Claims

1. A fuel cell system comprising:
a first controller configured to control a fuel cell module comprising a cell stack; and
a second controller configured to control an auxiliary unit comprising a peripheral device of the fuel cell module, wherein
the first controller is physically or virtually independent of the second controller.

2. The fuel cell system according to claim 1, wherein
the first controller comprises a notification unit configured to notify the second controller of a specific information element related to a state of the fuel cell module, and
the second controller comprises a receiving unit configured to receive the specific information element from the first controller.

3. The fuel cell system according to claim 1 or 2, wherein
the first controller and the second controller are constituted by physically independent processors.

4. The fuel cell system according to claim 1 or 2, wherein
the first controller and the second controller are constituted by virtually independent program modules.

5. The fuel cell system according to claim 2, or claim 3 or claim 4 according to claim 2, wherein
the specific information element comprises an information element related to an operation operating state of the fuel cell module.

6. The fuel cell system according to any one of claim 2 and claims 3 to 5 according to claim 2, wherein the specific information element comprises an information element related to a deterioration state of the fuel cell module.

7. The fuel cell system according to any one of claim 2 and claims 3 to 6 according to claim 2, wherein
the specific information element comprises an information element related to a temperature state of the fuel cell module.

8. The fuel cell system according to any one of claim 2 and claims 3 to 7 according to claim 2, wherein
the specific information element comprises an information element related to a scheduled stop time of the fuel cell module.

9. The fuel cell system according to any one of claim 2 and claims 3 to 8 according to claim 2, wherein
the specific information element comprises an information element related to a scheduled power generation start time of the fuel cell module.

10. The fuel cell system according to any one of claim 2 and claims 3 to 9 according to claim 2, wherein
the specific information element comprises an information element related to whether start-up of the fuel cell module is possible.

11. The fuel cell system according to any one of claims 2 to 10, wherein
the specific information element comprises an information element related to whether stoppage of the fuel cell module is possible.

12. The fuel cell system according to any one of claim 2 and claims 3 to 11 according to claim 2, wherein
the specific information element comprises an information element related to a state of a fluid supplied from the auxiliary unit to the fuel cell module.

13. The fuel cell system according to any one of claim 2 and claims 3 to 12 according to claim 2, wherein
the specific information element comprises an information element related to an abnormal state of the fuel cell module.

14. A fuel cell module comprising:
a cell stack; and
a controller physically or virtually independent of a predetermined controller configured to control an auxiliary unit comprising a peripheral device of the fuel cell module.

15. An auxiliary unit comprising:
a peripheral device of a fuel cell module comprising a cell stack; and
a controller physically or virtually independent of a predetermined controller configured to control the fuel cell module.
